(19)

Europäisches Patentamt
European Patent Office
Office européen des brevets

(11) **EP 3 653 908 A1**

(12) **EUROPEAN PATENT APPLICATION**

(43) Date of publication:
   **20.05.2020  Bulletin 2020/21**

(51) Int Cl.:
   **F16H 59/02** *(2006.01)*

(21) Application number: **18382815.1**

(22) Date of filing: **16.11.2018**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**
   Designated Validation States:
   **KH MA MD TN**

(71) Applicant: **Fico Triad, S.A.**
   **08028 Barcelona (ES)**

(72) Inventor: **Jou Prat, Ramón**
   **08232 VILADECAVALLS (ES)**

(74) Representative: **ZBM Patents - Zea, Barlocci & Markvardsen**
   **Rambla Catalunya, 123**
   **08008 Barcelona (ES)**

(54) **SHIFTER LEVER ASSEMBLY**

(57)   The shifter lever assembly 10 comprises a shifter lever 200 and a boot assembly 100 that includes a boot frame 130 with an inner portion 135 facing the shifter lever 200 and an outer portion, and a boot body 110 adapted to at least substantially cover the shifter lever 200 externally. The boot body 110 has a first portion 115 to be attached to a portion of the shifter lever 200 and a second portion 116 to be attached to the boot frame. At least one elastic band is provided extending between a first end 145 and a second end 146 and running along an inner portion 111 of the boot body 110. The boot assembly 100 further comprises elastic band attaching means 150 for attaching the second end 146 of the elastic band 140 to a portion of the boot frame 130 separated from the second portion 116 of the boot body 110.

FIG. 1

EP 3 653 908 A1

# Description

## Field of the invention

The present disclosure relates to shifter lever assemblies for motor vehicles.

## Background

Common shifter lever assemblies typically comprise a shifter lever having a knob that can be moved for controlling transmission gear ratios. The shifter lever is usually covered externally by a boot assembly that includes a boot body. The boot body is typically made of a textile material suitable for at least closing a clearance between the knob and a console, dashboard or any other place where a shifter could be arranged, while allowing the movement of the shifter lever in use.

In general, boot assemblies further include a boot frame having an inner portion facing the shifter lever and an outer portion. Boot bodies have a first portion intended to be attached directly or indirectly to a portion of the shifter lever and a second portion to be attached directly or indirectly to the boot frame.

With this standard configuration it has been found that the boot body usually gets trapped or pinched between shifter components and the console. This undesirably results in damages in the boot body, especially when it is made of textile material. In order to avoid this, a number of elastic bands are sewed in an inner portion of the boot body before the boot body is attached, usually by thermal welding, to the boot frame. The elastic bands provide rigidity acting as a tensor and prevent pinching while reducing the likelihood of the textile boot getting trapped.

It has been however found that provision of elastic bands sewed to the boot body results in thicker areas that should be hidden in order to show a constant and good appearance. Also, attachment of the elastic bands is performed in a location of the boot frame that is determined when design of the whole shifter lever assembly has been completed at the end of the project. If modifications are required at final stages of the project in order to adapt attachment of the elastic bands, a big impact on costs and timings are undesirably involved.

## Summary

A shifter lever assembly is provided herein comprising a shifter lever and a boot assembly. An inner portion refers hereinafter to a portion facing the shifter lever, and an outer portion refers to an opposite portion thereto. Also, a number refers hereinafter to several elements, that is, two or more elements.

The boot assembly includes a boot frame having an inner portion facing the shifter lever and an outer portion, and a boot body adapted to at least substantially cover the shifter lever externally. The boot body has a first portion to be attached directly or indirectly to a portion of the shifter lever and a second portion to be attached directly or indirectly to the boot frame.

The boot assembly further includes at least one elastic band and, in some examples, it may be preferred to include a number of elastic bands. Although reference is made hereinafter to an elastic band, it is understood that the same is applicable when two or more elastic bands are provided. The elastic band acts as a boot protector, providing some rigidity to the boot body. For this purpose, the elastic band is arranged to extend between a first end and a second end. The elastic band is arranged running along an inner portion of the boot body. The elastic band may be a separate part from the boot body. The first end of the elastic band may be directly or indirectly attached to the first portion of the boot body. At least one elastic band is preferred to be arranged to run adjacent the inner portion of the boot frame.

In one example, an unstretched length of the elastic band is less than or equal to 1.2 times a distance between the first end and the second end of the elastic band. In a further example, an elongation of the elastic band expressed as a percentage is greater than or equal to a ratio of the length of the elastic band when the shifter lever is in a furthest position away from the second portion of boot body to an unstretched length of the elastic band. The above specific characteristics for the elastic band in the present boot assembly have been shown to be suitable for advantageously preventing the boot body from becoming trapped in use while allowing the shifter lever to move through all the positions during operation.

Elastic band attaching means are also provided for attaching the second end of the elastic band to a portion of the boot frame separated from the second portion of the boot body. Said attaching means are thus configured to allow the elastic band to be attached to the boot frame such that the elastic band and the boot body are separated from each other at a given distance. Separation distance between the elastic band and the boot body may sometimes not be constant and the elastic band and the boot body may be in contact with each other in some cases.

Said elastic band attaching means may preferably be adapted for releasably attaching the second end of the elastic band to the boot frame. In particular, it may be preferred that the elastic band attaching means are adapted for attaching the second end of the elastic band to at least the inner portion of the boot frame and in general for attaching the second end of the elastic band to the boot frame such that the elastic band is arranged in an inner portion of the boot frame.

The elastic band attaching means may comprise a number of different attaching elements formed in the boot frame or attached thereto defining different predefined attaching positions for the second end of the elastic band to the boot frame. In one example, the elastic band attaching means comprise a clip to be attached to at least the inner portion of the boot frame and configured for retaining the second end of the elastic band. In other examples, the inner portion of the boot frame may be adapted to attach the clip at different predefined positions. Many equivalent solutions are possible to attach the elastic band to the boot frame at different positions such as for example holes, protrusions, recesses, etc. It may be preferred that the elastic bands are attached to the boot frame through the clip at different positions around the boot frame. It is thus possible to easily modify the attachment position of the elastic band in the shifter lever assembly having the above described boot assembly. This can be carried out at any time regardless manufacturing stages without impacting boot frame shape and without requiring tool modifications.

The shifter lever assembly may further comprise means for attaching the boot body to the shifter lever. In one example, said means may comprise a boot ring suitable for attaching the first portion of the boot body to the shifter lever. Attachment of the boot body to the shifter lever may be fixed or mobile. In the latter case, the boot ring may comprise a slider capable of sliding along the shifter lever. The elastic band can be attached to the boot ring or slider.

For assembling the above shifter lever assembly, one portion of the boot body is attached to the boot frame, one end of the elastic band is attached to a predefined position in the boot frame such that the elastic band runs on a boot frame inner portion, and another portion of the boot body is attached to the shifter lever. A clip may be provided at one end of the elastic band for attachment to a predefined position in the boot frame.

With the above described shifter lever assembly having the particular configuration of the boot assembly, elastic band or bands acting as a boot protector can be fitted to a shifter lever assembly final product without requiring modifications in the boot body and the boot frame to adapt to the lever assembly. This results in delays, or increases in costs being avoided. In addition, provision of the one or more elastic bands separate from the boot body provides better and constant appearance.

Brief description of the drawings

Non-limiting examples of the present disclosure will be described in the following, with reference to the appended drawings, in which:

Figure 1 is a general perspective view of one example of the present shifter lever assembly;
Figure 2 and 3 are sectional views of the shifter lever assembly where relative parameters regarding the mechanical properties of the elastic band are shown;
Figures 4-8 are sectional views of several examples of the elastic band attaching means; and
Figures 9-12 are sectional and perspective views showing examples of attaching the elastic band to the shifter lever.

DETAILED DESCRIPTION OF EXAMPLES

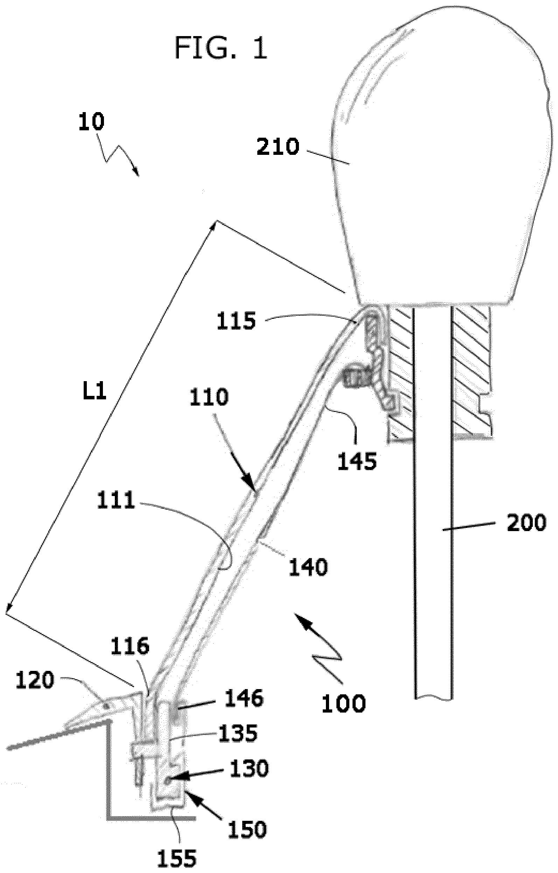

The examples in the figures 1-12 show a shifter lever assembly 10 that comprises a shifter lever 200 having a knob 210 and a boot assembly 100. The boot assembly 100 includes a boot body 110 adapted to at least substantially cover the shifter lever 200 externally, and particularly the clearance around a lower portion of the shifter lever 200.

The boot assembly 110 further includes a boot frame 130 provided to retain the boot body 110 in place. The boot body 110 is attached to the boot frame 130. The boot frame 130 has in turn means for attaching it where the shifter lever assembly 10 is installed such as for example on a console. A bezel may be also provided for concealing attachment between the boot frame 130 and the console. The boot frame 130 has an inner portion 135 that is, a portion facing the shifter lever 200, and an outer portion, opposed to the inner portion 135.

The boot body 110 has a first portion 115, which in the drawings corresponds to a boot body upper portion and a second portion 116, which in the drawings corresponds to a boot body lower portion. The boot body first portion 115 is configured to be attached to a corresponding upper portion of the shifter lever 200. The boot body second portion 116 is configured to be attached to the outer portion of the boot frame 130, that is, a portion opposed to the inner portion 135, as stated above.

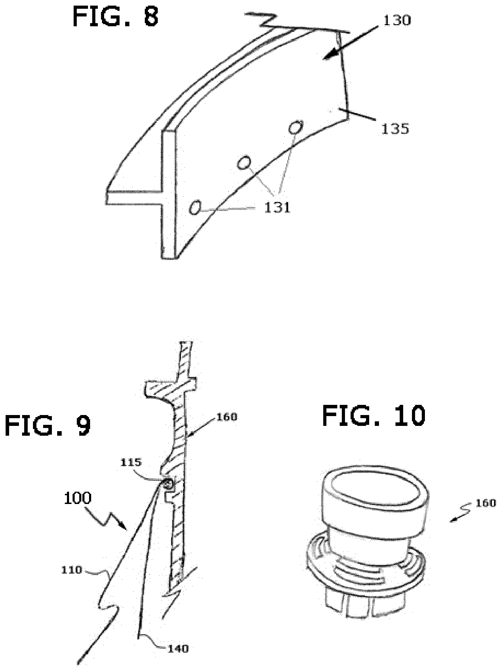

The boot assembly 100 further includes two or more elastic bands 140 of which only one has been illustrated in the figures. The elastic bands 140 extend between a first end 145, which in the drawings corresponds to an upper end, and a second end 146, which in the drawings corresponds to a lower end. The elastic bands 140 are arranged to run along an inner portion 111 of the boot body 110. It is to be noted that the elastic bands 140 are separate parts from the boot body 110 and are suitable for acting as a protector element, providing some rigidity to the boot body 110. The first end 145 of the elastic band 140 is attached to the first portion 115 of the boot body 110 that corresponds to a top portion of the boot body 110 in the drawings, as stated above, as shown in figure 9 for example. In other figures, the first end 145 of the elastic band 140 is attached to a boot ring 160. The elastic bands 140 are arranged to run adjacent the inner portion 135 of the boot frame 130.

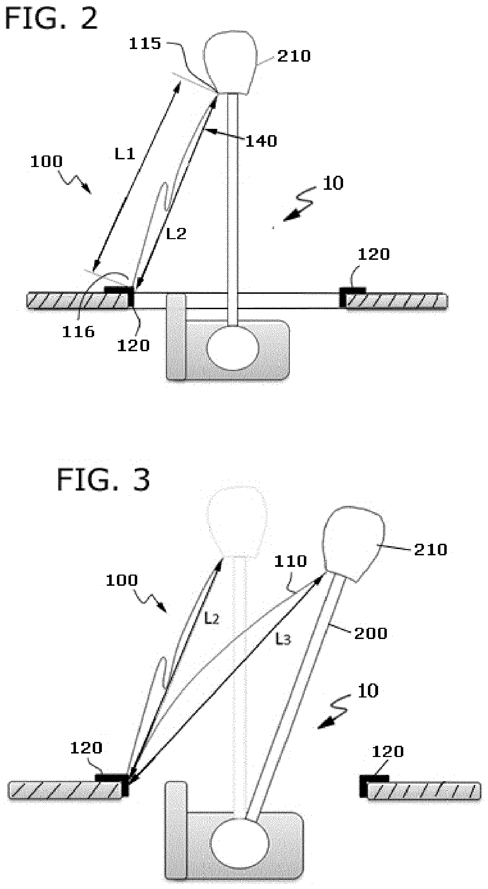

Figures 2 and 3 of the drawings show relative parameters of the elastic band 140 that characterize mechanical properties thereof. Referring to said figures, it is preferred that the elastic band 140 meets the following conditions:

$$L2 \leq 1.2 \, x \cdot L1$$

$$E \geq L3/L2 \, x \cdot 100$$

wherein:

> L1: distance between the first and second ends 145, 146 of the elastic band 140;
> L2: unstretched length of the elastic band 140;
> L3: length of the elastic band 140 when the shifter lever 200 is in a furthest position away from the second portion 116 of boot body 110; and
> E: elongation (%) of the elastic band 140.

Choosing the elastic band 140 to have the above specific mechanical characteristics advantageously results in that the boot body 110 is prevented from becoming trapped in use as the shifter lever 200 is moved while providing a certain degree of rigidity to the boot body 110.

The boot assembly 100 further includes elastic band attaching means 150. The elastic band attaching means 150 are configured for releasably attaching the second end 146 of the elastic band 140 at different predefined positions of the boot frame 130 in a manner that is separated from the second portion 116 of the boot body 110. Although it is preferred having the elastic band 140 attached at a boot frame inner portion 135, it is essential that the elastic band 140 is attached anywhere in the boot frame 130 such that the elastic band 140 runs on said boot frame inner portion 135.

In the non-limiting examples shown in the drawings, the elastic band attaching means 150 comprise a clip 155 capable of receiving the second end of the elastic band 146 at a number of different predefined positions. The clip 155 is configured to be attached to the inner portion 135 of the boot frame 130, but also to an outer portion of the boot frame 130 if required so as to retain the second end 146 of the elastic band 140 to the boot frame 130.

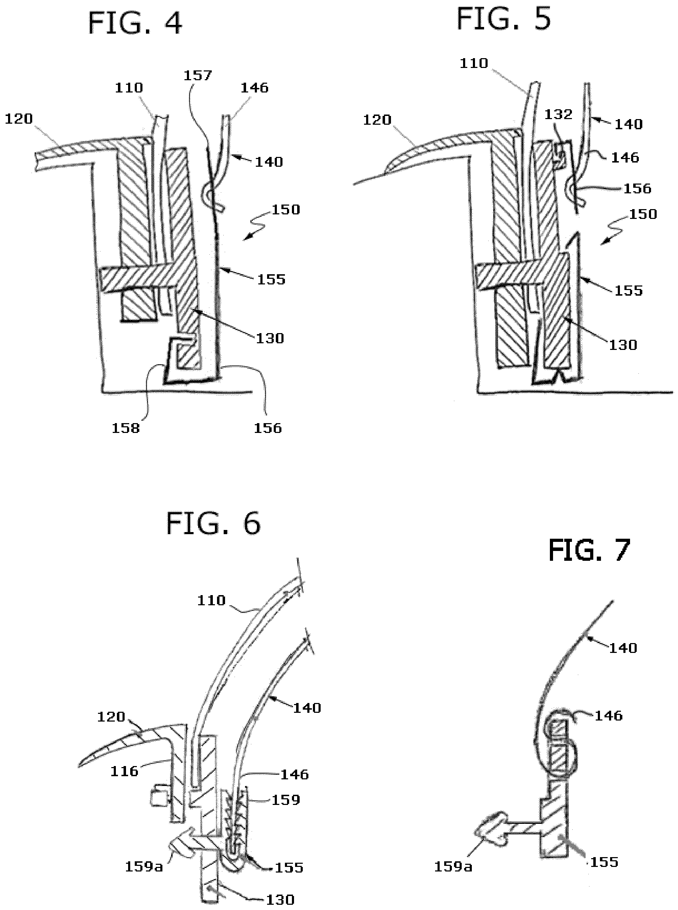

Figures 4-8 show examples of elastic band attaching means.

Figure 4 shows a first example of the clip 155 for releasably attaching the second end 146 of the elastic band 140 to the boot frame 130. In this example, the clip 155 comprises a L shaped plate 156 with a first end portion 157 adapted to attach the second end 146 of the elastic band 140, and a second end portion 158 adapted to attach to an outer portion of the boot frame 130.

Figure 5 shows a second example of the clip 155 for releasably attaching the second end 146 of the elastic band 140 to the boot frame 130. In this example, the clip 155 comprises a plate 156 attached to a protrusion 132 formed in the inner portion 135 of the boot frame 130 and adapted to attach the second end 146 of the elastic band 140.

Figure 6 shows a third example of the clip 155 for releasably attaching the second end 146 of the elastic band 140 to the boot frame 130. In this example, the clip 155 comprises a U-shaped body 159 adapted for receiving and retaining the second end 146 of the elastic band 140. The U-shaped body 159 has an attaching protrusion 159a configured for attachment at a number of different predefined positions to the boot frame 130, in that case, through holes. Yet in the additional example shown in figure 7, the clip 155 is adapted to tie the second end 146 of the elastic band 140 thereto. An attaching protrusion 159a is also provided for attachment at a number of different predefined holes 131 defining positions in the boot frame 130, as shown in figure 8.

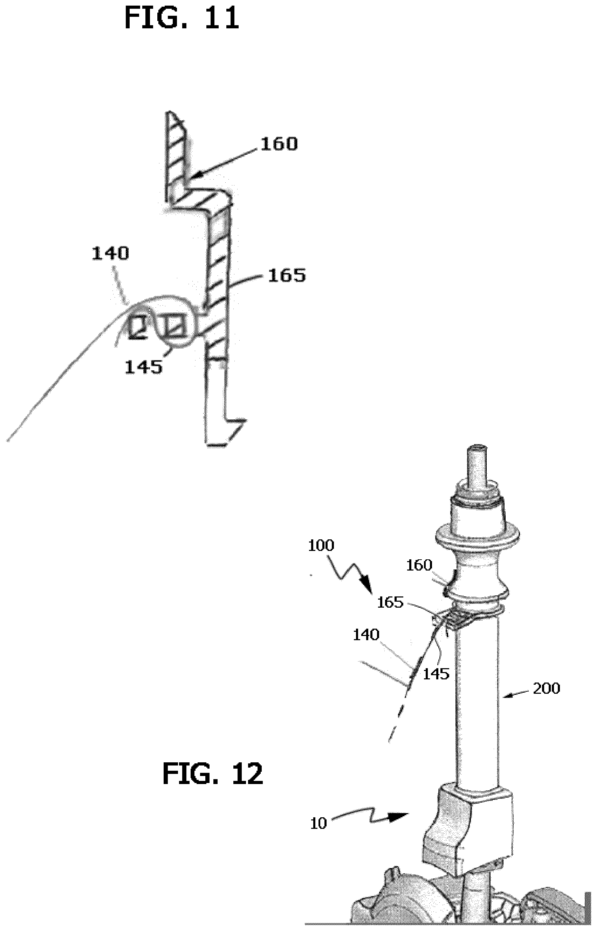

Figures 9-12 show examples of attaching the elastic band 140 to the shifter lever 200 through a boot ring 160, which has been illustrated in figure 10 of the drawings. In said examples of figures 9-12, the first end 145 of the elastic band 140 can be attached to the boot ring 160 directly or indirectly through the first portion 115 of the boot body 110. Specifically, in the example shown in figure 9, the boot ring 160 is configured so as to slide along the shifter lever 200 with the first portion 115 of the boot body 110 being attached to the shifter lever 200. In this example, the first end 145 of the elastic band 140 is sewed to the first portion 115 of the boot body 110. Figure 11 is a cross-sectional view of the boot ring 160 with an inner protrusion 165 for attachment of the first end 145 of the elastic band 140. Figure 12 shows an overall perspective view of the boot ring 160 for attaching the elastic band 140 to the shifter lever 200, with the boot ring being in the form of a slider 160 capable of sliding along the shifter lever 200 and with the first end 145 of the elastic band 140 attached thereto.

The method for assembling the above boot assembly in a shifter lever assembly comprises attaching the second portion 116 of the boot body 110 to the boot frame 130, attaching the elastic band 140 to a predefined position in the boot frame 130 such that the elastic band 140 runs on an boot frame inner portion 135, attaching the first portion 115 of the boot body 110 to the shifter lever 200, and attaching the elastic band 140 to the shifter lever 200 or to the first portion 115 of the boot body 110.

The method may further include reversing the boot body 110, for example after the boot body 110 has been attached, e.g. welded, to the boot frame 130, and passing the lever knob 210 through the reversed boot body 110. Reversing step means herein turning the boot body 110 inside out such that the boot body inner portion 111 becomes the boot body outer portion and vice versa. Then, the boot ring 160 with the elastic band 140 and the clip 155 are mounted on the lever knob 210 to fix the boot body 110 in position. Finally, the boot body 110 is reversed again while the lever knob 210 is still inserted through the boot body 110 to be in the operating natural position.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

**Claims**

1. A shifter lever assembly (10) comprising a shifter lever (200) and a boot assembly (100), the boot assembly (100) including a boot frame (130) having an inner portion (135) facing the shifter lever (200) and an outer portion, and a boot body (110) adapted to at least substantially cover the shifter lever (200) externally, the boot body (110) having a first portion (115) to be attached directly or indirectly to a portion of the shifter lever (200) and a second portion (116) to be attached directly or indirectly to the boot frame (130), wherein it further includes at least one elastic band (140) extending between a first end (145) and a second end (146) and running along an inner portion (111) of the boot body (110), the boot assembly (100) further comprising elastic band attaching means (150) for attaching the second end (146) of the elastic band (140) to a portion of the boot frame (130) separated from the second portion (116) of the boot body (110).

2. The shifter lever assembly (10) of claim 1, wherein the elastic band attaching means (150) are adapted for releasably attaching the second end (146) of the elastic band (140) to the boot frame (130).

3. The shifter lever assembly (10) of claim 1, wherein the elastic band attaching means (150) are adapted for attaching the second end (146) of the elastic band (140) to at least the inner portion (135) of the boot frame (130).

4. The shifter lever assembly (10) of any of the claims 1-3, wherein the elastic band attaching means (150) comprise a clip (155) to be attached to at least the inner portion (135) of the boot frame (130) and configured for retaining the second end (146) of the elastic band (140).

5. The shifter lever assembly (10) of any of the claims 1-4, wherein it further comprises a boot ring (170) for attaching the first portion (115) of the boot body (110) to the shifter lever (200).

6. The shifter lever assembly (10) of claim 5, wherein boot ring comprises a slider (170) capable of sliding along the shifter lever (200).

7. The shifter lever assembly (10) of any of the claims 1-6, wherein the first end (145) of the elastic band (140) is directly or indirectly attached to the first portion (115) of the boot body (110).

8. The shifter lever assembly (10) of any of the preceding claims, wherein an unstretched length (L2) of the elastic band (140) is less than or equal to 1.2 times a distance (L1) between the first end (145) and the second end (146) of the elastic band (140).

9. The shifter lever assembly (10) of any of the preceding claims, wherein an elongation E (%) of the elastic band (140) is greater than or equal to L3/L2x100 wherein (L2) is an unstretched length of the elastic band (140) and (L3) is a length of the elastic band (140) when the shifter lever (200) is in a furthest position away from the second portion (116) of boot body (110).

10. The shifter lever assembly (10) of any of the preceding claims, wherein the elastic band (140) is a separate part from the boot body (110).

11. The shifter lever assembly (10) of any of the preceding claims, wherein the elastic band attaching means (150) comprise a number of different attaching elements formed in the boot frame (130) defining different predefined attaching positions for the second end (146) of the elastic band (140) to the boot frame (130).

12. The shifter lever assembly (10) of any of the preceding claims, wherein at least one elastic band (140) is arranged to run adjacent the inner portion (135) of the boot frame (130).

13. The shifter lever assembly (10) of any of the preceding claims, wherein it includes a number of elastic bands (140).

14. A method for assembling a boot assembly (100) in a shifter lever assembly (100) as claimed in any of the claims 1-13, the boot assembly (100) comprising a boot frame (130) and a boot body (110) having a first portion (115) and a second portion (116) and being adapted to at least substantially cover the shifter lever (200) externally, the boot body (110) having a first portion and a second portion (116), the method comprising attaching the second portion (116) of the boot body (110) to the boot frame (130), attaching the elastic band (140) to a predefined position in the boot frame (130) such that the elastic band (140) runs on an boot frame inner portion (135), attaching the first portion (115) of the boot body (110) to the shifter lever (200), and attaching the elastic band (140) to the shifter lever (200) or to the first portion (115) of the boot body (110).

15. The method of claim 14, wherein it comprises providing a clip (155) at one end (146) of the elastic band (140) for attachment to a predefined position in the boot frame (130).

# FIG. 1

# FIG. 2

# FIG. 3

FIG. 4

FIG. 5

FIG. 6

FIG. 7

FIG. 8

130

135

131

FIG. 9

160

115

100

110

140

FIG. 10

160

## FIG. 11

160

140

165

145

## FIG. 12

100

160

165

140

145

200

10

Europäisches
Patentamt

European
Patent Office

Office européen
des brevets

# EUROPEAN SEARCH REPORT

**Application Number**

EP 18 38 2815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 331 421 A2 (OPEL ADAM AG [DE]) 30 July 2003 (2003-07-30) | 1-15 | INV. F16H59/02 |
| Y | * figures 8,9,11,12 * * paragraphs [0015], [0016], [0036], [0037], [0038], [0039] * ----- | 7,14 | |
| Y | DE 296 15 147 U1 (AUDI AG [DE]) 10 October 1996 (1996-10-10) * figure 1 * * paragraphs [0012], [0013], [0014] * ----- | 7,14 | |
| A | KR 2004 0034156 A (HYUNDAI MOTOR CO LTD) 28 April 2004 (2004-04-28) * figures 2,3 * ----- | 2,4,15 | |
| A | KR 2003 0070383 A (HYUNDAI MOTOR CO LTD [KR]) 30 August 2003 (2003-08-30) * figure 3 * ----- | 2,4,15 | |
| A | JP S59 104825 U (-) 14 July 1984 (1984-07-14) * figures 1,4 * ----- | 2,4,15 | TECHNICAL FIELDS SEARCHED (IPC) |
| A | FR 2 868 996 A1 (BOURBON AUTOMOBILE SOC PAR ACT [FR]) 21 October 2005 (2005-10-21) * figures 1-4 * ----- | 2,4,15 | F16H G05G B60K |

The present search report has been drawn up for all claims

| Place of search | Date of completion of the search | Examiner |
|---|---|---|
| Munich | 25 April 2019 | Werner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**EP 3 653 908 A1**

**ANNEX TO THE EUROPEAN SEARCH REPORT
ON EUROPEAN PATENT APPLICATION NO.**                    EP 18 38 2815

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2019

| Patent document cited in search report | | | Publication date | Patent family member(s) | | | Publication date |
|---|---|---|---|---|---|---|---|
| EP 1331421 | A2 | | 30-07-2003 | AT | 508300 | T | 15-05-2011 |
| | | | | DE | 10203258 | A1 | 31-07-2003 |
| | | | | EP | 1331421 | A2 | 30-07-2003 |
| DE 29615147 | U1 | | 10-10-1996 | NONE | | | |
| KR 20040034156 | A | | 28-04-2004 | NONE | | | |
| KR 20030070383 | A | | 30-08-2003 | NONE | | | |
| JP S59104825 | U | | 14-07-1984 | JP | S6213857 | Y2 | 09-04-1987 |
| | | | | JP | S59104825 | U | 14-07-1984 |
| FR 2868996 | A1 | | 21-10-2005 | NONE | | | |

For more details about this annex : see Official Journal of the European Patent Office, No. 12/82